# EUROPEAN PATENT APPLICATION

(11) **EP 4 386 513 A1**
(43) Date of publication of application: **19.06.2024**
(21) Application number: 23216010.1
(22) Date of filing: 12.12.2023
(51) Int. Cl.: G05D 23/19, G06N 20/00, F24F 11/00

(54) **TRANSFER LEARNING MODEL FOR NEWLY SETUP ENVIRONMENT**

(30) Priority: 12.12.2022 US 202263431958 P
(71) Applicant: Computime Ltd, Shatin, New Territories (HK)
(72) Inventor: XU, Yunjian, Shatin, New Territories, Hong Kong (HK); HAO, Liang Liang, Shatin, New Territories, Hong Kong (HK); MAO, Shuai, Shatin, New Territories, Hong Kong (HK); FAN, Pak Ming, Shatin, New Territories, Hong Kong (HK); CHAN, Chi Lung, Shatin, New Territories, Hong Kong (HK); HA, Wai Leung, Shatin, New Territories, Hong Kong (HK); WONG, Chi Shing Raymond, Shatin, New Territories, Hong Kong (HK)
(74) Representative: Eisenführ Speiser

(57) **Abstract**

A smart thermostatic system is disclosed that applies one or more of a reinforcement and/or adaptive learning model for a new environment with the trained model from another environment so as to initiate status of a thermostatic device. In one example, the thermostatic system uses a pretrained machine learning model that is transferred from a first thermostatic system to a second thermostatic system in a similar sub-environment. Temperature data and other data collected by the thermostatic device is used to fine-tune and train the pretrained model to learn, predict, and better adjust the operation of the thermostatic system.

## Description

### Cross Reference to Related Applications

This application claims the benefit of priority to US provisional patent application serial number 63/431,958, filed Dec. 12, 2022. The aforementioned priority patent application is herein incorporated by reference in its entirety for any and all purposes.

### Summary of Description

Artificial Intelligence (AI) and Machine Learning (ML) is now widely applying to smart building and smart home projects. For implementing machine learning algorithm in real life application, we need to input massive data to train and validate the model before final application. It also requires heavy computing power and time to complete such training. To train a model, we need to input data with known similar characteristics for any case. For HVAC system, we can try to learn the thermal characteristic and temperature prediction of the environment through the installed thermostat. However, the result is only accurate for the same or similar environment. This invention is applying a reinforcement or adaptive learning model for a new environment with the trained model from another environment as initiate status.

Various embodiments of the invention are described more fully hereinafter. The invention may be embodied in many different forms and should not be construed as limited to the embodiments set forth herein.

One disclosed embodiment relates to an implementation of an improved thermostatic system using a trained machine learning model that is transferred from a first thermostatic system to a second thermostatic system. In one disclosed embodiment, a thermostatic system is a heating, ventilation, and air conditioning (HVAC) system used for one or more rooms or office spaces in a building that determines operations from the trained machine learning model.

### Brief Description of Drawings

A more complete understanding of aspects described herein and the advantages thereof may be acquired by referring to the following description in consideration of the accompanying drawings, in which like reference numbers indicate like features, and wherein:
Figure 1 depicts an example of various aspects of a transfer learning system in accordance with one or more illustrative aspects described herein.
Figure 2 shows an illustrative flowchart of steps performed by a system of layers in a deep neural network using a long short-term (LSTM) memory structure in accordance with one or more illustrative aspects described herein.
Figure 3A illustrates a neural network with multiple layers of nodes and a feedback loop in accordance one or more illustrative aspects described herein.
Figure 3B illustrates one example of an artificial intelligence architecture, such as a transformer, for use in accordance one or more illustrative aspects described herein
Figure 4 shows an illustrative diagram of steps performed by a system that uses advanced machine learning (ML) techniques in accordance one or more illustrative aspects described herein.
Figure 5 is an illustrative graph of loss datapoints representing a learning curve of the machine learning performed in accordance one or more illustrative aspects described herein.

### Detailed Description

In the following description of the various embodiments, reference is made to the accompanying drawings identified above and which form a part hereof, and in which is shown by way of illustration various embodiments in which aspects described herein may be practiced. It is to be understood that other embodiments may be utilized and structural and functional modifications may be made without departing from the scope described herein. Various aspects are capable of other embodiments and of being practiced or being carried out in various different ways. It is to be understood that the phraseology and terminology used herein are for the purpose of description and should not be regarded as limiting. Rather, the phrases and terms used herein are to be given their broadest interpretation and meaning. The use of "including" and "comprising" and variations thereof is meant to encompass the items listed thereafter and equivalents thereof as well as additional items and equivalents thereof.

As a general introduction to the subject matter described in more detail below, aspects described herein are directed towards the methods and systems disclosed herein. One aspect of this disclosure provides effective, efficient, scalable, and convenient technical solutions that address various issues associated with an illustrative smart thermostatic system that uses one or more of a reinforcement and/or adaptive learning model for a new environment with the trained model from another environment so as to initiate status of a thermostatic device. In one example, the thermostatic system uses a pretrained machine learning model that is transferred from a first thermostatic system to a second thermostatic system in a similar sub-environment. Temperature data and other data collected by the thermostatic device is used to fine-tune and train the pretrained model to learn, predict, and better adjust the operation of the thermostatic system.

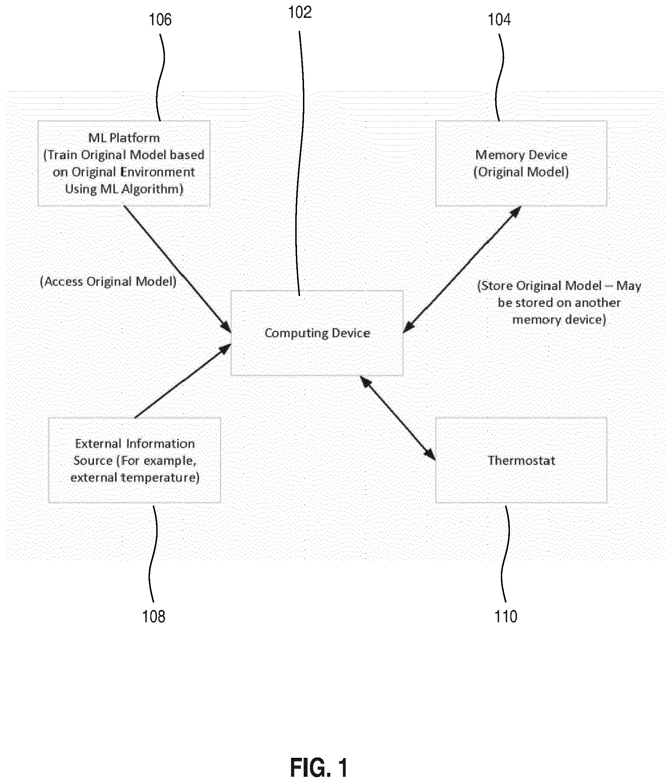

Referring to Figure 1, the thermostat or thermostatic device 110 is in communication with the computing device 102. The computing device is in communication with the first memory device 104.

The thermostat or thermostatic device 110 includes a temperature sensor and is configured to detect transfer input data of the environment of the thermostat or thermostatic device over incremental periods of time. The incremental periods of times may be measured in hours or days (or any longer or shorter period of time). The transfer input data may include but is not limited to: a temperature data, a temperature set point data, occupancy data, thermostat or thermostatic device state data, fan speed data, boiler or heating data, and humidity data and/or combination thereof. The thermostat or thermostatic device transmits the transfer input data to the computing device.

In one embodiment, the transfer input data of the environment of the thermostat or thermostatic device is collected over a time period of a month (or any longer or shorter period of time).

In one embodiment, the thermostat or thermostatic device further includes a movement sensor configured to detect an occupancy data determined by a time period data the movement sensor detects persons in the environment of the thermostat or thermostatic device.

The computing device includes a processor and memory for storing the transfer input data. The computing device receives the transfer input data from the thermostat or thermostatic device. The computing device processes the transfer input data and transmits it to the first memory device. In one embodiment, there are multiple thermostats or thermostatic devices in communication with the computing device. In this embodiment, the computing device receives multiple sets of transfer input data for each thermostat or thermostatic device in the new thermostatic system.

In another embodiment, the computing device is in communication with the second memory device. The computing device may also be in communication with and is not limited to: other computing devices and/or external devices/sources 108 and/or a combination thereof. Other computing devices and/or external devices/sources may transmit additional transfer input data to the computing device.

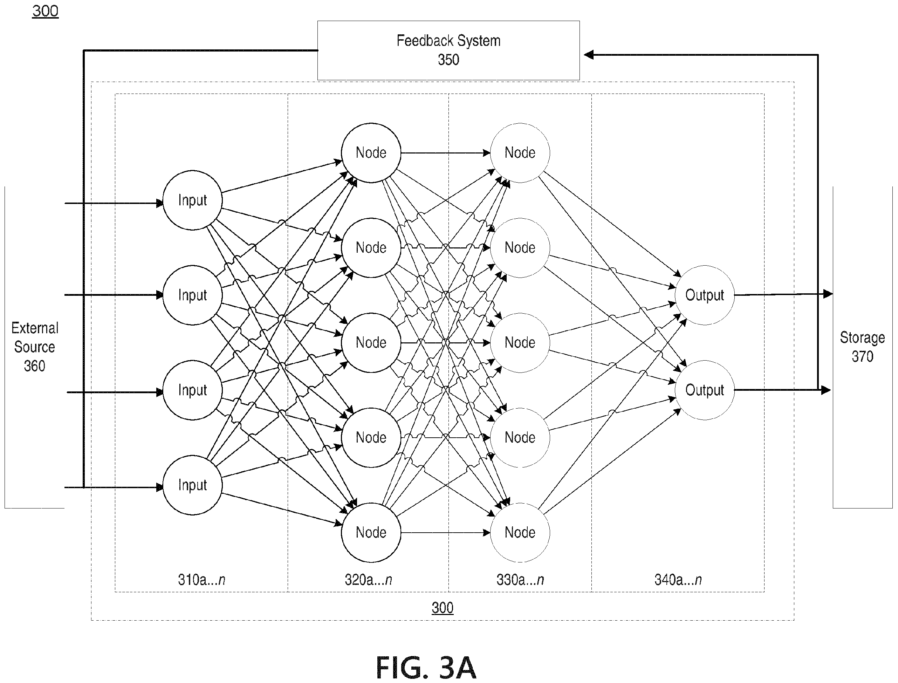

In one embodiment, the trained machine learning model 106 comprises a thermostatic model dataset including multiple layers of a deep neural network 300 that are trained from input layers determined from one or more sets of input data 360 from a thermostatic system, as illustrated in Figure 3A. The input layers of the deep neural network are trained from one or more sets of input data over incremental periods of time. The incremental periods of times may be measured in hours or days (or any longer or shorter period of time). Newer layers are added into the deep neural network and trained from the input layers as new input data over incremental periods of time is received by the thermostatic model dataset. When the incremental periods of time increase and the newer layers 310a, 320a, 330a, 340a of the deep neural network are trained, the newer layers of the deep neural network become more capable of predicting the one or more sets of input data over future incremental periods of time. When the deep neural network is capable of predicting the one or more sets of input data over future incremental periods of time, the deep neural network starts training an output layer that includes output data 370 based on predictions of the one or more sets of input data over future incremental periods of time. In other embodiments, the output data based on the predictions of the one or more sets of input data over future incremental periods of time may be determined from any layer in the deep neural network. The feedback provided by the feedback system 350 may be mere reinforcement (e.g., providing an indication that output is correct or incorrect, awarding the machine learning algorithm a number of points, or the like) or may be specific (e.g., providing the correct output) fine tuning.

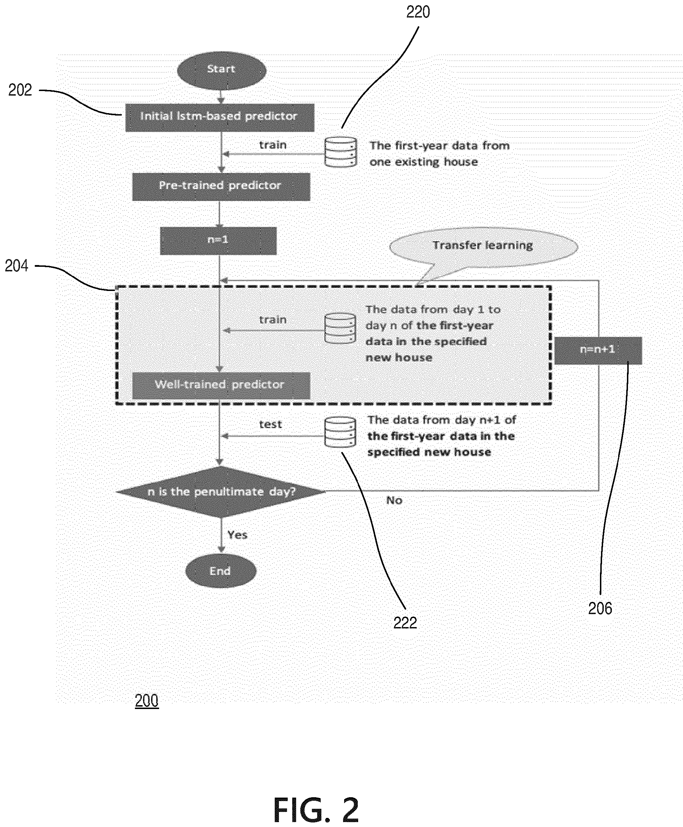

The predictions of the one or more sets of input data over future incremental periods of time require large amounts of data and computing power. In one disclosed embodiment, the layers or output layers of the deep neural network use 202 a long short-term (LSTM) memory structure for predictions of the one or more sets of input data over future incremental periods of time, as illustrated in the flowchart 200 in Figure 2.

The long short-term memory (LSTM) structure includes a long-term state and a short-term state. When the incremental periods of time increase bringing in new input data, the long-term state decides what new input data to read or store and what old input data 220 to forget. The short-term state is then determined from the long-term state for a specific period of time. Figure 2 illustrates that an appropriately selected pre-trained machine learning model 204 may be used to provide a warm start to the machine learning model controlling the behavior of a thermostatic device. Regularly recurring input of data 222 may assist in retraining and fine-tuning the machine learning model as the days progress 206.

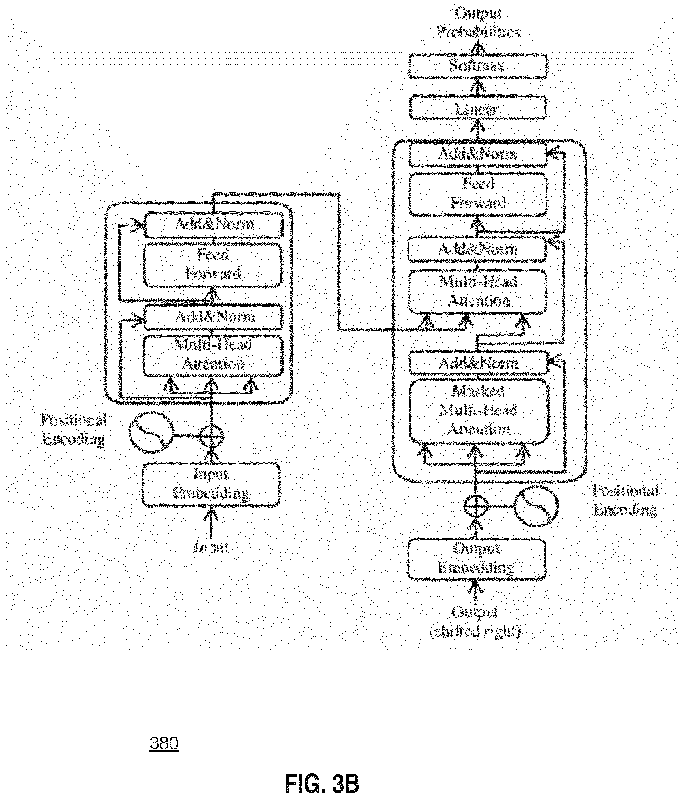

In another embodiment, the layers or output layers of the deep neural network may use an AI transformer architecture 380 (or memory structure) for predictions of the one or more sets of input data over future incremental periods of time. An illustrative AI transformer architecture is shown in Figure 3B.

Referring to the LSTM embodiment, the one or more sets of input data over incremental periods of time may come from a thermostat or thermostatic device. The input data from the thermostat or thermostatic device may include but is not limited to: a temperature data, a temperature set point data, occupancy data, thermostat or thermostatic device state data, fan speed data, boiler or heating data, and humidity data and/or combination thereof.

The output data based on the predictions of the one or more sets of input data over future incremental periods of time may include but is not limited to: a thermostat or thermostatic device state data, temperature set point data, fan speed control data, boiler or heating control data, and/or combination thereof.

The thermostatic model dataset transmits the output data to the thermostatic system. The output data is then received by the thermostatic system. The thermostatic system then determines the operations of the thermostatic system based on the output data.

Another disclosed embodiment includes a thermostat or thermostatic device, a computing device, a first memory device, and a second memory device.

The second memory device includes a memory storing an initial thermostatic model dataset. The initial thermostatic model dataset includes multiple layers of an initial deep neural network that are trained from initial input layers determined from one or more sets of initial input data from an initial thermostatic system. The initial input layers of the initial deep neural network are trained from one or more sets of initial input data over incremental periods of time. The incremental periods of times may be measured in hours or days (or any longer or shorter period of time). Newer initial layers are added into the deep neural network and trained from the initial input layers as new initial input data over incremental periods of time is received by the initial thermostatic model dataset. When the incremental periods of time increase and the newer initial layers of the initial deep neural network are trained, the newer initial layers of the initial deep neural network become more capable of predicting the one or more sets of initial input data over future incremental periods of time. When the initial deep neural network is capable of predicting the one or more sets of initial input data over future incremental periods of time, the initial deep neural network starts training an initial output layer that includes initial output data based on predictions of the one or more sets of initial input data over future incremental periods of time. In other embodiments, the initial output data based on the predictions of the one or more sets of input data over future incremental periods of time may be determined from any layer in the initial deep neural network.

In one embodiment, the second memory device or a user of the second memory device then determines a transfer thermostatic model dataset from the initial thermostatic model dataset. In one embodiment, the transfer thermostatic model dataset is the initial thermostatic model dataset. In another embodiment, the transfer thermostatic model dataset only includes the initial input layer and some of the newer initial layers of the initial deep neural network. In another embodiment, the transfer thermostatic model dataset only includes the initial input layer of the initial deep neural network.

The second memory device is in communication with the first memory device. The second memory device transmits the transfer thermostatic model dataset to the first memory device.

In other embodiments, the second and first memory devices may also be servers, cloud servers, or computing devices.

The first memory device includes a processor and memory for storing the transfer thermostatic model dataset. The first memory device receives the transfer thermostatic model dataset and stores the transfer thermostatic model dataset into memory. The processor of the first memory device or a user of the first memory device will determine what layers of the initial deep neural network to use for a new thermostatic or HVAC system based on the transfer thermostatic model dataset and new input data from a new thermostatic or HVAC system.

In one embodiment, the initial deep neural network of the transfer thermostatic model dataset is trained from initial input data from an initial thermostatic system or HVAC system. The initial thermostatic or HVAC system is used for multiple rooms, floors, or office spaces in a building or dwelling. As the initial deep neural network received more initial input data related to multiple rooms, floors, or office spaces in a building or dwelling, the initial deep neural network developed pre-determined categories of sub-environments to group each room, floor or office space based on initial input data from a thermostat or thermostatic device from each room, floor, or office in a building or dwelling. When the categories of sub-environments are determined, a generic model will be trained for each category of sub-environments using multiple sets of initial input data from one or more thermostat or thermostatic devices of that particular category of sub-environments.

The predetermined categories of sub-environments of the initial deep neural network may be determined by a machine learning classification approach. The machine learning classification approach is a supervised learning task based on known, collected meta-data of a building type and/or a property type.

In another embodiment, the predetermined categories of sub-environments of the initial deep neural network may be determined by a machine learning clustering approach. The machine learning clustering approach is an unsupervised learning task where an unsupervised dimension reduction method is used to separate the data into clusters of similar data type.

Several illustrative variations of embodiments include but are not limited to:
- IRL (in real life) implementations/integrations into product suites
   o improved thermostatic system
   o **HVAC** system with sensors collecting data in a particular environment with its specific operational characteristics
   o Use case: Occupancy detection
      ▪ Built in the thermostat/thermostatic device
      ▪ Provided by an external, connected device
      ▪ the ML model to output parameters for maximizing energy savings, when detect no occupancy in the environment and/or with permission from end user.
- Variations on system architecture running ML model
   o Embodiment #1 - ML model is stored in the cloud and runs in the cloud.
   o Embodiment #2 - ML model is stored in the cloud, but is downloaded to an on-premise gateway that runs the ML model at the user physical site.
   o Embodiment #3 - ML model uses a federated learning approach and is stored and run on the edge device without compromising security or privacy. The ML model is collected and eventually uploaded to the cloud.
- Variations on one or more inputs into the ML model
   o room temperature
   o thermostat set point
   o external temperature from external devices or publicly available internet source
   o humidity from external devices or publicly available internet source
   o thermostat On/Off status
   o fan speed
   o (optional) occupancy status (as provided by one or more sources)
- Variations on one or more outputs from the ML model
   o thermostat On/Off
   o level
   o fan speed commands
- Variations on AI/ML techniques for the system
   o Training of the ML model/neural network in one environment and installing it in a new environment controlled by HVAC
      ▪ When a new device is in service, it will collect data for a pre-determined period, e.g., one month, before it can use the AI mode
      ▪ Using the collected data, the new device will be categorized into one of the pre-determined categories.
      ▪ The TL model from that pre-determined category will be retrieved and trained with the newly collected data
      ▪ The newly collected data will tune the parameters of the tuning layer
   o continuous reinforcement learning - continuous RL will base on newly installed environment and equipment under control.
      ▪ First learn from different environments, such as, residential home, office, etc. Then the system may base on some preliminary information, such as, the registered location and determine the transfer model.
   o adaptive learning model
   o ML categorized using classification and/or clustering approach into sub-environments (SE)
      - For classification, the determination is based on collected meta-data of the environment, such as building type and property type.
      - For clustering, an unsupervised dimension reduction method is used to separate the data into different clusters.

      ▪ Once SEs are defined, a generic model will be trained for each SE using the data of all devices under that particular SE.
      ▪ Transfer Learning (TL) model - For the trained generic models in each SE, all layers except the tuning layer of the Deep Neural Network (DNN) will be set to non-transferable.
- The disclosed system comprises a software algorithm:
   o Using a learned model and transfer to new installed space for HVAC control is novel in the art.
   o The initial parameters of the model was learned from other thermostat installed in other space. The continuous reinforcement learning may be based on newly installed environment and equipment under control.
   o Once transferred to new environment, there might be no relationship between the old and new, in some implementations. It will continuously to learn base on new environment. Yes, we will learn from different environment, such as, residential home, office, etc. The system is based on some preliminary information, such as, the registered location and determine the transfer model, in some implementations.

### Full Energy Saving AI Model

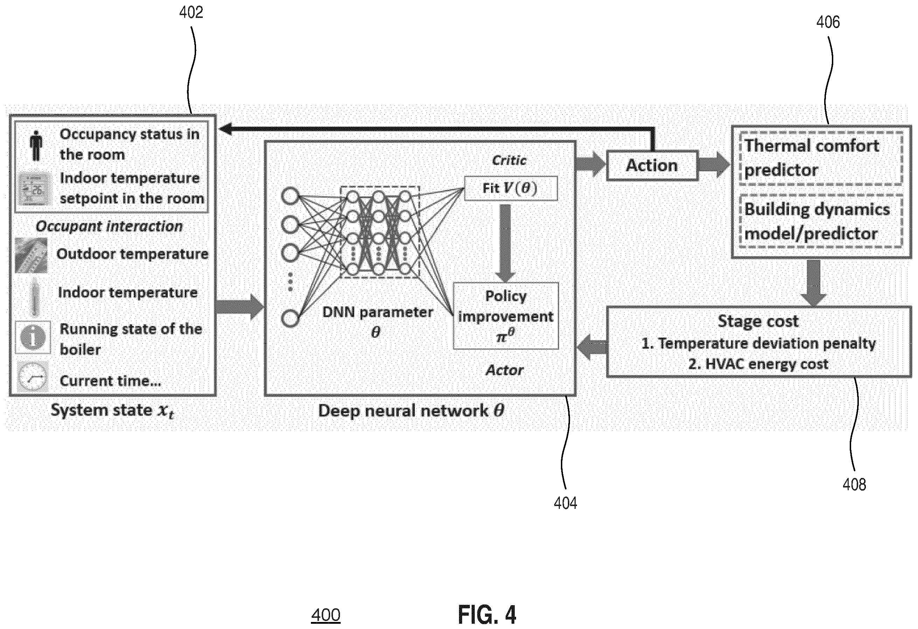

Figure 4 shows the basic reinforcement learning model 404 that is based on historical data and other factors 402 to train the model for any particular premises that is controlled with a thermostat. The machine learning model may predict 406 actions and outcomes, and advise 408 accordingly.

### Pre-learning / Transfer learning algorithm

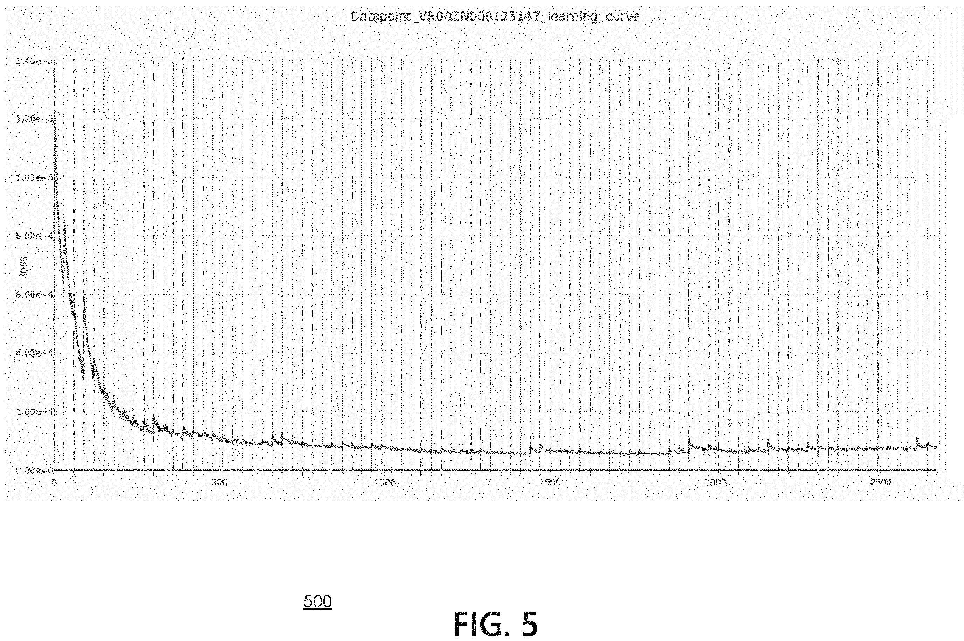

For any newly installed thermostat, there is no historical data. Figure 5 illustrates datapoints on a learning curve 500 showing that use any existing learned model and transfer to new space as the initial model to facilitate the reinforcement learning algorithm.

Referring to Figure 1, the first memory device receives the transfer input data from the computing device. The processor of the first memory device compares the transfer input data to the pre-determined categories of sub-environments from the initial deep neural network of the transfer thermostatic model dataset. The processor determines which pre-determined category of the sub-environments the transfer input data is most similar to and groups the transfer input data into that pre-determined category of the sub-environments. The processor then retrieves the initial input layers from the initial deep neural network of the generic model used for this category of sub-environments and trains these initial input layers based on the transfer input data over incremental periods of time. All the initial input layers except the tuning layer will be set to non-transferable. The transfer input data will tune the parameters of the tuning layer over incremental periods of time. The initial input layers form the bottom of a transfer deep neural network for the transfer thermostatic model dataset of the transfer thermostatic environment or system.

This is known as a transfer learning model where trained layers from a similar deep neural network are used to initiate training for a similar, new environment in a new neural network. The transfer machine learning model is applying a reinforcement or adaptive learning model for a new environment with the trained model from another environment as the initiating, input layers of the transfer thermostatic model dataset. The transfer machine learning model may be used for environments such as office buildings or residential homes. The environments may be based on the registered locations, too.

Reusing pretrained layers of the initial deep neural network requires less input data for training in the transfer learning model. Layers of a deep neural network may be trained on trainable weights or fixed weights. Some or all of the reused pretrained layers may be frozen where the weights are made non-trainable so that the newer layers train on transfer input data. As more transfer input data comes in, the more reused pretrained payers may be unfrozen to resume training on trainable weights.

In one embodiment, the transfer learning model is stored and ran in a cloud computing environment.

In another embodiment, the transfer learning model is stored in the cloud computing environment, but is downloaded to an on-premise gateway that runs the transfer learning model at a user physical site.

In another embodiment, the transfer learning model uses a federated learning approach and is stored and run on an edge device without compromising security or privacy. The transfer learning model is collected and eventually uploaded to the cloud.

Newer layers are added into the transfer deep neural network and trained from the initial input layers as transfer input data over incremental periods of time is received by the second memory device storing the transfer thermostatic model dataset. When the incremental periods of time increase and the newer layers of the transfer deep neural network are trained, the newer layers of the transfer deep neural network become more capable of predicting transfer input data over future incremental periods of time. When the transfer deep neural network is capable of predicting the one transfer input data over future incremental periods of time, the transfer deep neural network starts training a transfer output layer that includes transfer output data based on predictions of the transfer input data over future incremental periods of time. In other embodiments, the transfer output data based on the predictions of transfer input data over future incremental periods of time may be determined from any layer in the initial deep neural network. The second memory device transmits the transfer output data to the computing device.

The output data based on the predictions of the transfer input data over future incremental periods of time may include but is not limited to: a thermostat or thermostatic device state data, temperature set point data, fan speed control data, boiler or heating control data, and/or combination thereof.

In one embodiment the second memory device transmits the transfer output data to the thermostat or thermostatic device.

The computing device receives the transfer output data. The computing device transmits the output data to the thermostat or thermostatic device.

The thermostat or thermostatic device receives the transfer output data. The thermostat or thermostatic device may use the transfer output data to turn the thermostat or thermostatic device on or off, what temperature to use as a set point temperature, controlling fan speeds or cooling functions, and controlling boiler or heating functions.

In one example, the transfer learning may be used for hyperparameter optimization, such as with warm starts. This may be especially useful with linear models, which are sometimes trained with exact solvers that converge to a single true answer and their runtime depends in part on the values used at the start of the process. As such, this technique is sometimes used with lasso-regularized models that get good results with a hyperparameter search. In some examples, weight freezing techniques may be used as an option for transfer learning so that parameters/coefficients of a layer are not altered during the fine-tuning process. Of course, it's not possible to use weight freezing for all layers of a neural network, such as Figure 3A, since at least one layer needs to be altered for fine-tuning to be effective. One approach is to freeze all convolutional and/or normalizing layers, while only changing weights of fully connected layers.

Several illustrative embodiments include but are not limited to:
Embodiment 1:
   - A thermostatic system being improving its energy consumption and comfortability performance over time by applying reinforcement and/or adaptive learning model;
   - the system will start with an initial model that learn from one or more unknown environments.
   - The model will consist of input parameters of room temperature, thermostat set point, external temperature and/or humidity from external devices or publicly available internet source, thermostat On/Off status, and/or fan speed.
   - The output will be thermostat On/Off, level, or fan speed commands.
   - The model will be executed in cloud, in a gateway or inside the devices.
Embodiment 2:
   - The system of Embodiment 1 consists of occupancy detection built in the thermostat or as external connected device
   - The occupancy status is one of the input of the learning model
   - When detected no occupancy in the environment and with permission from end user, the model to output parameters for maximizing energy saving.
Embodiment 3:
   - The unknown environment of Embodiment 1, can be categorized using Classification or Clustering approach into sub-enviroments (SE).
   - For classification, the determination is based on known meta-data of the environment, such as building type and property type.
   - For clustering, an unsupervised dimension reduction method will be used to separate the data into different clusters.
   - Once SEs are defined, a generic model will be trained for each SE using the data of all devices under that particular SE.
   - For the trained generic models in each SE, all layers except the tuning layer of the Deep Neural Network (DNN) will be set to non-transferable.
   - This model is known as the Transfer Learning (TL) model
Embodiment 4:
   - When a new device is in service, it will collect data for a pre-determined period, say one month, before it can use the AI mode
   - Using the collected data, the new device will be categorized into one of the pre-determined categories.
   - The TL model from that pre-determined category will be retrieved and trained with the newly collected data
   - The newly collected data will tune the parameters of the tuning layer

Although the subject matter has been described in language specific to structural features and/or methodological acts, it is to be understood that the subject matter defined in the appended claims is not necessarily limited to the specific features or acts described above. Rather, the specific features and acts described above are described as example implementations of the following claims. One or more aspects of the disclosure may be embodied in computer-usable data or computer-executable instructions, such as in one or more program modules, executed by one or more computers or other devices to perform the operations described herein. Generally, program modules include routines, programs, objects, components, data structures, and the like that perform particular tasks or implement particular abstract data types when executed by one or more processors in a computer or other data processing device. The computer-executable instructions may be stored as computer-readable instructions on a computer-readable medium such as a hard disk, optical disk, removable storage media, solid-state memory, RAM, and the like. The functionality of the program modules may be combined or distributed as desired in various embodiments. In addition, the functionality may be embodied in whole or in part in firmware or hardware equivalents, such as integrated circuits, application-specific integrated circuits (ASICs), field programmable gate arrays (FPGA), and the like. Particular data structures may be used to more effectively implement one or more aspects of the disclosure, and such data structures are contemplated to be within the scope of computer executable instructions and computer-usable data described herein.

Various aspects described herein may be embodied as a method, an apparatus, or as one or more computer-readable media storing computer-executable instructions. Accordingly, those aspects may take the form of an entirely hardware embodiment, an entirely software embodiment, an entirely firmware embodiment, or an embodiment combining software, hardware, and firmware aspects in any combination. In addition, various signals representing data or events as described herein may be transferred between a source and a destination in the form of light or electromagnetic waves traveling through signal-conducting media such as metal wires, optical fibers, or wireless transmission media (e.g., air or space). In general, the one or more computer-readable media may be and/or include one or more non-transitory computer-readable media.

As described herein, the various methods and acts may be operative across one or more computing servers and one or more networks. The functionality may be distributed in any manner, or may be located in a single computing device (e.g., a server, a client computer, and the like). For example, in alternative embodiments, one or more of the computing platforms discussed above may be combined into a single computing platform, and the various functions of each computing platform may be performed by the single computing platform. In such arrangements, any and/or all of the above-discussed communications between computing platforms may correspond to data being accessed, moved, modified, updated, and/or otherwise used by the single computing platform. Additionally, or alternatively, one or more of the computing platforms discussed above may be implemented in one or more virtual machines that are provided by one or more physical computing devices. In such arrangements, the various functions of each computing platform may be performed by the one or more virtual machines, and any and/or all of the above-discussed communications between computing platforms may correspond to data being accessed, moved, modified, updated, and/or otherwise used by the one or more virtual machines.

Aspects of the disclosure have been described in terms of illustrative embodiments thereof. Numerous other embodiments, modifications, and variations within the scope and spirit of the appended claims will occur to persons of ordinary skill in the art from a review of this disclosure. For example, one or more of the steps depicted in the illustrative figures may be performed in other than the recited order, and one or more depicted steps may be optional in accordance with aspects of the disclosure.

## Claims

1. A thermostatic system enhanced with a machine learning model that is pretrained from another environment, the system comprising:
a thermostatic device including a temperature sensor, the thermostatic device configured to:
detect a temperature of an environment of the thermostatic device to determine a temperature data;
associate the temperature data with additional data comprising two or more of: an external temperature, external humidity, on-off status of a HVAC controlled by the thermostatic device, fan speed, and combination thereof;
transmit, over a communications network, the temperature data including the associated additional data; and
adjust at least one of the fan speed, the temperature of the environment, or combination thereof, by controlling the thermostatic device, based on an output data from a machine learning model; and
a computing device including a processor and a memory storing a pretrained thermostatic machine learning model, wherein the computing device is communicatively coupled to the thermostatic device over the communications network, and wherein the computing device is configured to:
receive the temperature data and store it in the memory of the computing device;
receive the additional data and store it in the memory of the computing device;
tune the pretrained thermostatic machine learning model based on the temperature data and the additional data to update the machine learning model;
infer the output data based on inputting the temperature data and additional data into the updated machine learning model; and
transmit the output data to the thermostatic device.

2. The system of claim 1, wherein a second and third thermostatic devices are communicatively coupled to the computing device.

3. The system of claim 1, wherein the thermostatic device further includes a movement sensor, wherein the additional data further includes an occupancy data determined by whether the movement sensor detects one or more persons in the environment of the thermostatic device.

4. The system of claim 3, wherein energy consumption by the thermostatic system is reduced by the machine learning model being configured to transmit, in the output data, a command to adjust the on-off status of the HVAC.

5. The system of claim 1, wherein the output data further includes a temperature set point data, thermostatic state data for adjusting the thermostatic device between on and off, and commands for controlling one or more fans in the environment of the thermostatic device.

6. The system of claim 1, wherein the environment of the thermostatic device is a room or an office space within a building.

7. The system of claim 1, wherein the tuning of the pretrained thermostatic machine learning model comprises weight freezing all but a particular layer of a neural network for the machine learning model.

8. The system of claim 1, wherein parameters of a tuning layer of the machine learning model are tuned by the temperature data and the additional data received from the thermostatic device.

9. The system of claim 1, further comprising a server computer storing a plurality of pretrained thermostatic machine learning models, wherein the pretrained thermostatic machine learning model stored in the memory of the computing device was received from the server and is one of the plurality of pretrained thermostatic machine learning models, the server computer configured to:
classify each of the plurality of pretrained thermostatic machine learning models based on metadata corresponding to an environment where pretraining occurred; and
provide from among the plurality of pretrained thermostatic machine learning models in response to a request from the thermostatic device to initialize, wherein the request includes a sub-environment of the thermostatic device.

10. The system of claim 1, wherein the thermostatic device is further configured to:
collect the temperature data and the associated additional data for a predetermined number of days upon initiation of the thermostatic device before receiving the output data from the machine learning model,
wherein the pretrained thermostatic machine learning model used by the computing device is based on metadata corresponding to the environment of the thermostatic device.

11. The system of claim 1, wherein the computing device is a gateway device on a same premises as a building in which the thermostatic device is installed.

12. A thermostatic device enhanced with a machine learning model that is pretrained from another environment, the device comprising:
a temperature sensor;
an interface to a communications network that is communicatively coupled to a server computer storing a plurality of pretrained thermostatic machine learning models;
a memory configured to store a thermostatic machine learning model;
a processor configured to:
transmit, through the interface to the communications network, metadata corresponding to an environment of the thermostatic device;
receive, through the interface, the thermostatic machine learning model for storage in the memory, wherein the thermostatic machine learning model is selected, by the server computer, based on the metadata, from among the plurality of pretrained thermostatic machine learning models stored at the server computer;
detect, using the temperature sensor, a temperature of the environment of the thermostatic device to determine a temperature data;
associate the temperature data with additional data comprising at least one of: an external temperature, external humidity, on-off status of a HVAC controlled by the thermostatic device, fan speed, and combination thereof; and
wait a predetermined number of days before adjusting at least one of the fan speed, the temperature of the environment, or combination thereof, based on an output data from the thermostatic machine learning model.

13. The device of claim 12, wherein the pretrained thermostatic machine learning model received from the server computer is updated by performing steps to:
tune the pretrained thermostatic machine learning model based on the temperature data and the additional data to update the machine learning model; and
infer the output data based on inputting the temperature data and additional data into the updated machine learning model.

14. The device of claim 12, further comprising a movement sensor configured to:
detect whether one or more persons are occupying the environment of the thermostatic device; and
cause the output data to adjust the thermostatic device to reduce energy consumption by the thermostatic system during non-occupancy in the environment.

15. The device of claim 12, wherein the environment of the thermostatic device is a room in a building.

16. The device of claim 12, wherein each of the plurality of pretrained thermostatic machine learning models corresponds to a unique sub-environment, and the server computer is configured to perform the selecting based on metadata corresponding to the environment of the thermostatic device.

17. A method involving a thermostatic system enhanced with a machine learning model that is pretrained from another environment, wherein the method comprises:
transmitting, through an interface communicatively coupled to a server computer, metadata corresponding to an environment of a thermostatic device installed in a building;
receiving, through the interface from the server computer, the thermostatic machine learning model for storage in a memory of the thermostatic device, wherein the thermostatic machine learning model is selected, by the server computer, based on the metadata, from among a plurality of pretrained thermostatic machine learning models stored at the server computer;
detecting, using a temperature sensor of the thermostatic device, a temperature of the environment of the thermostatic device to determine a temperature data;
associating the temperature data with additional data comprising at least one of: an external temperature, external humidity, on-off status of a HVAC controlled by the thermostatic device, fan speed, and combination thereof; and
waiting a predetermined number of days before adjusting, by a processor of the thermostatic device, at least one of the fan speed, the temperature of the environment, or combination thereof, based on an output data from the thermostatic machine learning model.

18. The method of claim 17, further comprising:
tuning, by the processor of the thermostatic device, the thermostatic machine learning model based on the temperature data and the associated additional data; and
inferring, by the processor of the thermostatic device, the output data based on the temperature data and the associated additional data inputted into the tuned thermostatic machine learning model.

19. The method of claim 18, wherein the selecting by the server computer is performed using a clustering technique with an unsupervised dimensionality reduction that identifies different clusters, and wherein the tuning of the thermostatic machine learning model comprises weight freezing all but a particular layer of a neural network for the machine learning model.

20. The method of claim 17, wherein parameters of a tuning layer of the machine learning model are tuned by the temperature data and the associated additional data.
